# FASCICULE DE BREVET EUROPEEN

(11) **EP 1 797 365 B1**
(45) Date de publication et mention de la délivrance du brevet: **11.03.2009**
(21) Numéro de dépôt: 05804242.5
(22) Date de dépôt: 27.09.2005
(51) Int. Cl.: F16L 55/38, F16L 55/46, B08B 9/04

(54) **INSTALLATION ET METHODE D'ENTRAINEMENT D'UN RACLEUR DE CONDUITE SOUS-MARINE**
INSTALLATION UND VERFAHREN ZUM BETRIEB EINES SCHRAPPERS FÜR UNTERWASSERPIPELINES
INSTALLATION AND METHOD FOR DRIVING A SUBMARINE PIPELINE SCRAPER

(30) Priorité: 30.09.2004 FR 0410348
(43) Date de publication de la demande: 20.06.2007
(73) Titulaire: Technip France, 92400 Courbevoie (FR)
(72) Inventeur: FRANQUEVILLE, Jean-Baptiste, F-92800 Puteaux (FR)
(74) Mandataire: Bertrand, Didier
(86) Numéro de dépôt international: PCT/FR2005/002391
(87) Numéro de publication internationale: WO 2006/035158

(56) Documents cités:
- WO-A-03/031865
- GB-A- 2 325 293
- US-A- 5 358 573
- US-A- 5 433 236

## Description

La présente invention se rapporte à une installation et une méthode permettant d'entraîner un racleur de conduites sous-marines.

Un domaine d'application envisagé est notamment celui des conduites sous-marines rigides adaptées au transport des hydrocarbures pour lesquelles il est nécessaire d'entraîner à l'intérieur, des racteurs ou « pig » en langue anglaise, pour les nettoyer ou pour les inspecter avec des dispositifs de contrôle.

Habituellement, les conduites sous-marines sont installées sur le fond marin où règne une pression hydrostatique déterminée par la profondeur d'eau. Elles sont équipées à chacune de leurs deux extrémités opposées de dispositifs permettant de propulser le racleur à l'intérieur de la conduite.

L'une des extrémités est équipée d'un dispositif de lancement dans lequel est initialement installée le racleur tandis que l'autre extrémité est équipée d'un dispositif de réception permettant de recevoir le racleur auprès qu'il a été lancé par le dispositif de lancement et entraîné en coulissement dans la conduite.

Afin de pouvoir propulser ce racleur dans une conduite, celui-ci doit être mobile en translation en délimitant toutefois la conduite en deux chambres sensiblement étanches, une chambre amont du côté du dispositif de lancement et une chambre aval vers le dispositif de réception. Ladite conduite étant initialement à une pression interne inférieure à ladite pression hydrostatique, par exemple à la pression ' atmosphérique, le racleur est alors lancé à l'intérieur de ladite conduite depuis ledit dispositif de lancement vers ledit dispositif de réception, en autorisant de l'eau dudit fond marin à entrer à travers ledit dispositif de lancement pour porter ladite chambre amont à ladite pression hydrostatique.

On pourra se référer au document WO 9 7/10 943, lequel décrit un tel racleur et une installation permettant de le mouvoir dans une conduite notamment pour y entraîner un riser.

Toutefois, les conduites sont parfois endommagées et déformées entre le dispositif de lancement et le dispositif de réception et le plus souvent elles sont sensiblement enfoncées sans nécessairement être perforées, ce qui bloque le racleur en translation. II est alors nécessaire de démonter la conduite ou parfois, la découper pour pouvoir récupérer le racleur. Une telle manipulation est bien évidemment coûteuse. Le dispositif terrestre, objet du document US 5 433 236 permet de contrôler la position d'un râcleur à l'intérieur d'un système de tuyauterie tortueux.

Un problème qui se pose et que vise à résoudre la présente invention est alors de fournir une installation et une méthode d'entraînement d'un racleur qui permette d'éviter une telle manipulation.

Dans ce but, et selon un premier objet la présente invention propose une méthode d'entraînement d'un racleur de conduite sous-marine, ladite conduite sous-marine étant adaptée à être installée sur le fond à une pression hydrostatique donnée, ladite conduite qui présente deux extrémités opposées étant équipée à l'une de ses extrémités, d'un dispositif de lancement et à l'autre extrémité d'un dispositif de réception, ledit racleur étant adapté à coulisser à l'intérieur de ladite conduite en délimitant deux chambres étanches, une chambre amont entre ledit dispositif de lancement et ledit racleur et une chambre aval entre ledit dispositif de réception et ledit racleur, ledit racleur étant susceptible d'être lancé à l'intérieur de ladite conduite depuis ledit dispositif de lancement vers ledit dispositif de réception, ladite méthode étant du type selon laquelle, on porte initialement ladite conduite à une pression interne inférieure à ladite pression hydrostatique, puis on autorise de l'eau dudit fond marin à entrer à travers ledit dispositif de lancement pour porter ladite chambre amont à ladite pression hydrostatique de façon à entraîner ledit racleur vers ledit dispositif de réception ; selon l'invention ladite méthode comprend en outre, les étapes suivantes : on autorise de l'eau à entrer à travers ledit dispositif de réception pour équilibrer la pression des deux chambres à la pression hydrostatique ; et, on injecte un fluide sous pression dans ladite chambre aval à travers ledit dispositif de réception, pour augmenter la pression dans ladite chambre aval à une pression supérieure à la pression hydrostatique et entraîner ledit racleur dans un sens opposé, vers ledit dispositif de lancement par quoi on permute les rôles respectifs dudit dispositif de lancement et dudit dispositif de réception.

Ainsi, une caractéristique de l'invention réside dans cette permutation des rôles du dispositif de lancement et du dispositif de réception, le premier devenant dispositif de réception et le second dispositif de lancement alors que selon l'art antérieur, aucun agencement n'était prévu pour la mise en oeuvre de cette permutation. C'est ainsi qu'en effet, le dispositif de lancement présente un logement cylindrique dans le prolongement duquel la conduite est raccordée et qui est non seulement adapté à recevoir le racleur mais aussi qui présente des moyens pour pouvoir injecter l'eau en amont du racleur et ce à une pression correspondant à la pression hydrostatique qui peut être extrêmement importante aux grandes profondeurs, ou même à une pression supérieure à la pression hydrostatique. Alors que le dispositif de réception lui, selon l'art antérieur, est simplement adapté à recevoir le racleur lorsque ce dernier est en bout de course, afin de le recueillir et il n'est pas prévu de moyens particuliers pour porter la chambre aval à une pression supérieure à la pression hydrostatique.

Ainsi donc, selon l'invention, en équilibrant la pression des deux chambres, amont et aval, après que le racleur soit par exemple resté coincé dans la conduite, on augmente la pression dans la chambre aval de façon à entraîner le racleur en marche arrière, vers le dispositif de lancement d'où il a été lancé. De la sorte, il n'est nul besoin de démonter la conduite pour récupérer le racleur et libéré la conduite puisqu'il est entraîné dans un sens opposé jusqu'au dispositif de lancement.

Avantageusement, initialement ladite conduite est à une pression d'eau interne sensiblement égale à la pression atmosphérique. Ainsi, en remplissant la conduite d'eau elle est difficilement compressible sous l'effet de la pression hydrostatique ou des accidents éventuels.

En outre, selon un mode de mise en oeuvre particulièrement avantageux, on libère l'eau de ladite chambre aval à travers ledit dispositif de réception lorsque ledit racleur est entraîné vers ledit dispositif de réception de façon à autoriser sa progression dans la conduite vers ledit dispositif de réception, si toutefois il n'en est pas empêché par une déformation de la conduite par exemple.

Par ailleurs, selon une caractéristique avantageuse on libère l'eau de ladite chambre amont qui est à la pression hydrostatique, à travers ledit dispositif de lancement lorsque ledit racleur est entraîné dans ledit sens opposé pour que la pression de la chambre amont ne s'équilibre pas avec celle de la chambre aval auquel cas le racleur resterait en position fixe.

Avantageusement, on injecte de l'eau sous pression à travers ledit dispositif de réception pour augmenter la pression dans ladite chambre aval à une valeur de pression supérieure à la pression hydrostatique, par exemple au moyen d'une pompe montée sur un robot télécommandé.

En outre, et ce de manière préférentielle, on autorise l'entrée d'eau dans le dispositif de lancement et le dispositif de réception au moyen d'un seul système mobile commandable qui est non seulement adapté à filtrer l'eau, laquelle contient un certain nombre d'impuretés mais aussi à injecter par exemple des produits anticorrosion, qui notamment, contribuent à la passivation de la surface interne de la conduite mise à nu par le racleur. De tels produits anticorrosion sont par exemple du type polyphosphate.

Selon un autre objet, la présente invention propose une installation d'entraînement d'un racleur de conduite sous-marine, selon la méthode décrite précédemment. Par ailleurs, selon l'invention ledit dispositif de réception est identique au dispositif de lancement pour autoriser de l'eau à entrer à travers ledit dispositif de réception de façon à équilibrer la pression des deux chambres à la pression hydrostatique. En outre, il est adapté à l'injection d'un fluide sous pression dans ladite chambre aval à travers ledit dispositif de réception, de façon à augmenter la pression dans ladite chambre aval à une pression supérieure à la pression hydrostatique et entraîner ledit racleur dans un sens opposé, vers ledit dispositif de lancement, par quoi les rôles respectifs dudit dispositif de lancement et dudit dispositif de réception sont permutés.

Ainsi, une autre caractéristique de l'invention réside dans la mise en oeuvre d'un dispositif de lancement structurellement identique au dispositif de réception fonctionnant tantôt comme dispositif de lancement, tantôt comme dispositif de réception, de façon à ne produire qu'un seul type de dispositif standard, ce qui permet une réduction significative des coûts de production.

Selon l'invention, lesdits dispositifs de réception et de lancement sont respectivement équipés d'un ensemble de réception actionnable adapté à être actionné pour autoriser le passage de l'eau. Ces organes de réception actionnables sont montés de façon identique sur les deux dispositifs.

En outre, l'installation comprenant des moyens de circulation d'eau adaptés à être raccordés de façon amovible audit ensemble de réception actionnable pour autoriser l'eau à entrer dans lesdits dispositifs, il est possible d'autoriser l'entrée d'eau dans l'un ou l'autre desdits dispositifs.

L'installation comprend également un dispositif d'échappement formant soupape, adaptés à être raccordé audit ensemble de réception actionnable pour interdire l'entrée d'eau dans lesdits dispositifs.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique en perspective illustrant un mode de mise en oeuvre de l'invention selon une première étape ;
- la Figure 2 est une vue schématique de l'invention représentée sur la Figure 1 selon une deuxième étape ; et,
- la Figure 3 est une vue schématique de l'invention représentée sur la Figure 1 selon une troisième étape.

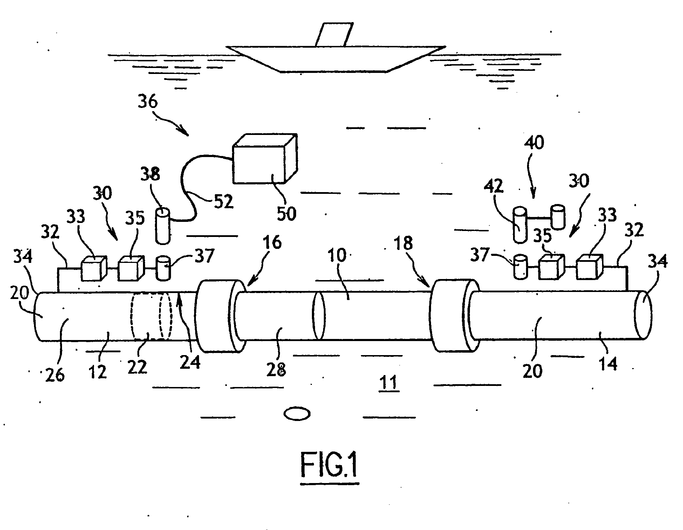

La Figure 1 montre une installation conforme à l'invention, comprenant une conduite sous-marine 10 étendue sur le fond marin 11 entre un dispositif de lancement 12 et un dispositif de réception 14. La conduite sous-marine 10 est ici représentée avec une longueur bien plus faible qu'elle ne l'est réellement, pour des raisons pratiques. Elle s'étend entre deux extrémités opposées, une première extrémité 16 et une seconde extrémité 18, sur une distance comprise entre la dizaine de mètres et plusieurs kilomètres.

Les dispositifs de lancement 12 et de réception 14 présentent une structure identique, constituée d'un corps tubulaire 20 dont le diamètre est voisin de celui de la conduite sous-marine 10, et tous les deux sont susceptibles d'être raccordés respectivement dans le prolongement des deux extrémités 16, 18 de la conduite 10.

Par ailleurs, le dispositif de lancement 12 présente ici, logé à l'intérieur du corps tubulaire 20, un racleur 22 joignant circonférentiellement de façon sensiblement étanche une paroi interne 24 de façon à définir une chambre amont 26 et une chambre aval 28 qui se prolonge elle, à l'intérieur de la conduite 10.

De plus, lesdits dispositifs de réception 14 et de lancement 12 sont équipés chacun d'un ensemble de réception actionnable 30 adapté à être actionné pour autoriser le passage de l'eau entre l'intérieur desdits dispositifs 12, 14 et l'extérieur. Pour ce faire, l'ensemble de réception actionnable présente un conduit principal 32 raccordé directement à une extrémité libre 34 du corps tubulaire 20, le conduit principal 32 étant prolongé par deux vannes d'arrêt 33, 35 et un réceptacle de raccordement 37.

Par ailleurs, un dispositif d'échappement formant soupape 40 et présentant un premier organe de connexion 42 est adapté à être relié à l'ensemble de réception actionnable 30. Pour ce faire, le premier organe de connexion 42 est engagé dans le réceptacle de raccordement 37 du dispositif de lancement 12 ou du dispositif de réception 14 et le dispositif d'échappement 40 permet d'évacuer l'eau de l'intérieur vers l'extérieur du corps tubulaire 20 à une pression donnée supérieure à la pression hydrostatique du fond marin sans pour autant autoriser, l'entrée d'eau si la valeur des pressions s'inverse.

En outre, l'ensemble de connexion actionnable 30 est adapté à être relié à des moyens de circulation d'eau 36 que l'on décrira ci-après et qui présente un second organe de connexion 38 adapté à être engagé dans le réceptacle de raccordement 37 de l'un ou l'autre des deux dispositifs de lancement 12 et de réception 14.

Les moyens de circulation d'eau 36, qui à l'inverse du dispositif d'échappement 40 permettent de laisser pénétrer de l'eau à la pression hydrostatique, à l'intérieur du corps tubulaire 20, sont constitués d'un système mobile commandable 50 prolongé par un raccord 52, lequel se termine par le second organe de connexion 38. Le système mobile commandable 50, ou «SPU» en langue anglaise pour « Subsea Pigging Unit», est adapté à autoriser le passage de l'eau initialement à la pression hydrostatique, à la filtrer pour la débarrasser des impuretés et éventuellement à y introduire des produits anticorrosion, pour l'injecter ensuite dans la chambre amont 26 qui elles est à une pression inférieure.

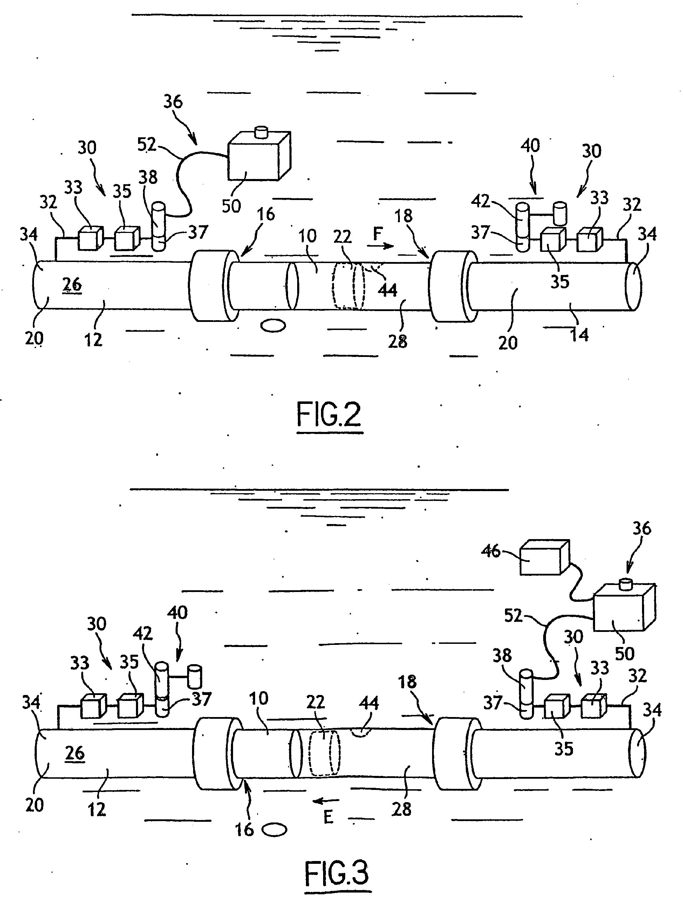

On se référera maintenant à la Figure 2 afin de détailler la méthode d'entraînement du racleur 22 que la présente installation permet de mettre en oeuvre.

On retrouve sur cette Figure 2 la conduite sous-marine 10, dont les extrémités 16, 18 ont été respectivement raccordées de façon étanche au dispositif de lancement 12 et au dispositif de réception 14 dans leur prolongement.

De façon totalement symétrique, le dispositif de réception 14 a été raccordé de manière étanche à la seconde extrémité 18 de la conduite sous-marine 10. Ainsi, la conduite sous-marine 10 et les deux dispositifs 12, 14 définissent un même espace divisé en deux par le racleur 22, pour former la chambre amont 26 et la chambre aval 28.

En outre, le système mobile commandable 50 est connecté à l'ensemble de connexion actionnable 30 du dispositif de lancement 12 par l'intermédiaire du second organe de connexion, engagé dans son réceptacle de raccordement 37. A l'autre extrémité 18 de la conduite 10, le dispositif d'échappement 40 est connecté à l'ensemble de connexion actionnable 30 du dispositif de réception 14 par le biais du premier organe de connexion 42. ,

Ainsi que l'illustre la Figure 2, le racleur 22 a quitté le corps tubulaire 20 pour la conduite sous-marine 10 selon un mode de mise en oeuvre que l'on va décrire.

Initialement, la conduite sous-marine 10, les chambres amont 26 et aval 28 sont à une pression inférieure à la pression hydrostatique qui règne au niveau du fond marin 11, par exemple à la pression atmosphérique. La conduite sous-marine peut être remplie d'eau ou d'air ou bien d'un mélange des deux. Ensuite, on commande le système mobile commandable 50 par l'intermédiaire d'un robot sous-marin non représenté par exemple, de façon à autoriser l'eau du fond marin à entrer dans la chambre amont à travers le dispositif de lancement 12. La pression interne de la chambre amont 26 augmente jusqu'à atteindre une valeur équivalente à la pression hydrostatique, par quoi le racleur 22 est entraîné en translation vers le dispositif de réception 14 selon la flèche F puisque la pression de la chambre aval 28 est elle, au moins au début du mouvement du racleur 22, a une pression inférieure de l'ordre de la pression atmosphérique.

Toutefois, durant cette étape, l'eau ou l'air initialement contenue dans la chambre aval 28, se comprime jusqu'à atteindre la pression hydrostatique. Les pressions des deux chambres 26, 28 étant alors à l'équilibre, des moyens complémentaires de pompage que l'on décrira ci-après, sont nécessaires pour injecter de l'eau dans la chambre amont 26 et terminer la course du racleur 22 qui aboutit théoriquement dans le dispositif de réception 14. C'est alors que le dispositif d'échappement 40 est mis en oeuvre pour laisser s'échapper l'eau ou l'air sous pression contenu dans la chambre aval 28.

Cependant, s'il rencontre un obstacle 44, le racleur 22 est susceptible d'être bloqué en translation dans la conduite sous-marine 10. Un tel obstacle 44 peut être provoqué par exemple par un écrasement partiel de la conduite. Dans ce cas, le racleur 22 ne peut en aucun cas franchir l'obstacle 44.

Ainsi, selon l'invention on équilibrera tout d'abord la pression dans les deux chambres, amont 26 et aval 28 avant d'augmenter la pression de la chambre aval 28 pour entraîner le racleur 22 dans un sens opposé E vers le dispositif de lancement 12 comme le montre la Figure 3.

Pour ce faire, en premier lieu, on permute les moyens de circulation d'eau 36 et le dispositif d'échappement 40 sur les dispositifs de lancement 12 et de réception 14. Ainsi, on procède au transfert du système mobile commandable 50 vers le dispositif de réception 14 auquel on le connecte par l'intermédiaire du second organe de connexion 38 que l'on engage dans le réceptacle de raccordement 37 de l'ensemble de connexion actionnable 30 du dispositif de réception 14.

Parallèlement, on relie le dispositif d'échappement 40 au dispositif de lancement 12 en engageant son premier organe de connexion 42, à la place du second 38, dans le réceptacle de raccordement 37.

De la sorte, les fonctions du dispositif de lancement 12 et du dispositif de réception 14 sont permutées, le premier devenant dispositif de réception et le second dispositif de lancement.

Selon le procédé conforme à l'invention, on autorise ensuite le passage de l'eau dans la chambre aval 28 afin de la portée à une pression équivalente à celle de la pression hydrostatique, si toutefois cela n'est pas déjà le cas, et par conséquent à celle de la chambre amont 26. De la sorte, le racleur 22 est à l'équilibre et ne subit aucune contrainte qui l'entraînerait en translation.

Puis, afin d'augmenter la pression de la chambre aval 28 pour la portée à une pression supérieure à la pression hydrostatique qui règne dans la chambre amont 26, on injecte de l'eau sous pression, comme on l'aurait fait dans l'autre sens si aucun obstacle ne s'était présenté, au moyen d'une pompe montée sur un robot télécommandé 46 par exemple. De cette manière, le racleur 22 est alors entraîné dans un sens contraire E, vers le dispositif, initialement de lancement 12, dans lequel il est susceptible d'être recueilli et stocké de nouveau.

Ainsi, en faisant jouer simplement le rôle de dispositif de lancement, au dispositif de réception 14 on récupère le racleur 22 sans démontage ou découpage particulier de la conduite sous-marine 10.

L'installation conforme à l'invention présente un avantage économique considérable puisque, outre la récupération du racleur 22, il n'est plus nécessaire de réaliser un dispositif de réception distinct d'un dispositif de lancement, mais simplement un seul dispositif standard adapté à remplir les deux fonctions, tantôt l'une lorsqu'il est connecté au système mobile commandable, tantôt l'autre lorsqu'il est connecté à l'organe d'échappement.

## Revendications

1. Méthode d'entraînement d'un racleur (22) de conduite sous-marine (10), ladite conduite sous-marine étant adaptée à être installée sur le fond marin (11) à une pression hydrostatique donnée, ladite conduite sous-marine (10) qui présente deux extrémités opposées étant équipée à l'une de ses extrémités (16), d'un dispositif de lancement (12) et à l'autre extrémité (18) d'un dispositif de réception (14), ledit racleur (22) étant adapté à coulisser à l'intérieur de ladite conduite (10) en délimitant deux chambres étanches, une chambre amont (26) entre ledit dispositif de lancement (12) et ledit racleur (22) et une chambre aval (28) entre ledit dispositif de réception (14) et ledit racleur (22), ledit racleur étant susceptible d'être lancé à l'intérieur de ladite conduite (10) depuis ledit dispositif de lancement (12) vers ledit dispositif de réception (14), ladite méthode étant du type selon laquelle, on porte initialement ladite conduite (10) à une pression interne inférieure à ladite pression hydrostatique, puis on autorise de l'eau dudit fond marin à entrer à travers ledit dispositif de lancement (12) pour porter ladite chambre amont (26) à ladite pression hydrostatique de façon à entraîner ledit racleur (22) vers ledit dispositif de réception (14) ;
**caractérisée en ce qu'**elle comprend en outre, les étapes suivantes :
- on autorise de l'eau à entrer à travers ledit dispositif de réception (14) pour équilibrer la pression des deux chambres à la pression hydrostatique ; et,
- on injecte un fluide sous pression dans ladite chambre aval (28) à travers ledit dispositif de réception (14), pour augmenter la pression dans ladite chambre aval (28) à une pression supérieure à la pression hydrostatique et entraîner ledit racleur (22) dans un sens opposé, vers ledit dispositif de lancement (12), par quoi on permute les rôles respectifs dudit dispositif de lancement (12) et dudit dispositif de réception (14).

2. Méthode d'entraînement selon la revendication 1, **caractérisée en ce qu'**on porte initialement ladite conduite sous-marine (10) à une pression d'eau interne sensiblement égale à la pression atmosphérique.

3. Méthode d'entraînement selon la revendication 2, **caractérisée en ce qu'**on libère l'eau de ladite chambre aval (28) à travers ledit dispositif de réception (14) lorsque ledit racleur (22) est entraîné vers ledit dispositif de réception (14).

4. Méthode d'entraînement selon l'une quelconque des revendications 1 à 3, **caractérisée en ce qu'**on libère l'eau de ladite chambre amont (26) qui est à la pression hydrostatique, à travers ledit dispositif de lancement (12) lorsque ledit racleur (22) est entraîné dans ledit sens opposé vers ledit dispositif de lancement (14).

5. Méthode d'entraînement selon l'une quelconque des revendications 1 à 4, **caractérisée en ce qu'**on injecte de l'eau sous pression pour augmenter la pression dans ladite chambre aval (28) à une valeur de pression supérieure à la pression hydrostatique.

6. Méthode d'entraînement selon l'une quelconque des revendications 1 à 5, **caractérisée en ce qu'**on autorise l'entrée d'eau dans le dispositif de lancement (12) et le dispositif de réception (14) au moyen d'un seul système mobile commandable (36).

7. Installation d'entraînement d'un racleur (22) de conduite sous-marine adaptée au transport des hydrocarbures, ladite conduite sous-marine (10) étant adaptée à être installée sur le fond à une pression hydrostatique donnée, ladite conduite qui présente deux extrémités opposées étant équipée à l'une de ses extrémités (16), d'un dispositif de lancement (12) et à l'autre extrémité (18) d'un dispositif de réception, ledit racleur (22) étant adapté à coulisser à l'intérieur de ladite conduite (10) en délimitant deux chambres étanches, une chambre amont (26) entre ledit dispositif de lancement (12) et ledit racleur (22) et une chambre aval (28) entre ledit dispositif de réception (14) et ledit racleur (22), ledit racleur étant susceptible d'être lancé à l'intérieur de ladite conduite (10) depuis ledit dispositif de lancement (12) vers ledit dispositif de réception (14), en portant initialement ladite conduite à une pression interne inférieure à ladite pression hydrostatique, ledit dispositif de lancement (12) étant équipé d'un ensemble de réception actionnable (30) adapté à être actionné pour autoriser de l'eau dudit fond marin entourant ladite installation à la pression hydrostatique, à entrer à travers ledit dispositif de lancement (12) pour porter ladite chambre amont (26) à ladite pression hydrostatique de façon à entraîner ledit racleur (22) vers ledit dispositif de réception (14) ; **caractérisée en ce qu'**elle comprend :
- des moyens de circulation d'eau (36) constitués d'un système mobile commandable (50) et un dispositif d'échappement formant soupape (40), adaptés à être raccordés audit ensemble de réception actionnable (30), lesdits dispositifs de réception (14) et de lancement (12) étant identiques et respectivement équipés d'un ensemble de réception actionnable (30) adapté à être actionné pour autoriser le passage de l'eau ;
et **en ce que** ledit système mobile commandable (50) et ledit dispositif d'échappement (40) sont respectivement connectés à l'ensemble de connexion actionnable (30) du dispositif de lancement (12) et à l'ensemble de connexion actionnable (30) du dispositif de réception (14) pour porter ladite chambre amont (26) à ladite pression hydrostatique,
tandis que ledit système mobile commandable (50) est transféré audit dispositif de réception (14) pour y être connecté et ledit dispositif d'échappement (40) est relié au dispositif de lancement (12), pour autoriser de l'eau à entrer à travers ledit dispositif de réception (14) de façon à équilibrer la pression des deux chambres à la pression hydrostatique, de l'eau sous pression étant injectée dans ladite chambre aval (28), de façon à augmenter la pression dans ladite chambre aval (28) à une pression supérieure à la pression hydrostatique et entraîner ledit racleur (22) dans un sens opposé, vers ledit dispositif de lancement (12), par quoi les rôles respectifs dudit dispositif de lancement (12) et dudit dispositif de réception (14) sont permutés.

## Claims

1. A method for driving a scraper (22) for a subsea pipe (10), said subsea pipe being designed to be laid on the seabed (11) at a given hydrostatic pressure, said subsea pipe (10), which has two opposite ends, being equipped at one of its ends (16) with a launch device (12) and at the other end (18) with a receiver trap device (14), said scraper (22) being designed to slide inside said pipe (10), therein delimiting two watertight chambers, an upstream chamber (26) between said launch device (12) and said scraper (22) and a downstream chamber (28) between said receiver trap device (14) and said scraper (22), said scraper being able to be launched into said pipe (10) from said launch device (12) toward said receiver trap device (14), said method being of the type whereby said pipe (10) is initially brought to an internal pressure lower than said hydrostatic pressure, then water from said seabed is allowed to enter via said launch device (12) in order to bring said upstream chamber (26) to said hydrostatic pressure in such a way as to drive said scraper (22) toward said receiver trap device (14); **characterized in that** it further comprises the following steps:
- water is allowed to enter via said receiver trap device (14) in order to equalize the pressure of the two chambers with respect to the hydrostatic pressure; and
- a pressurized fluid is injected into said downstream chamber (28) via said receiver trap device (14) in order to increase the pressure in said downstream chamber (28) to a pressure higher than the hydrostatic pressure and drive said scraper (22) in an opposite direction, toward said launch device (12), by means of which the respective roles of said launch device (12) and of said receiver trap device (14) are reversed.

2. The drive method as claimed in claim 1, **characterized in that** said subsea pipe (10) is initially brought to an internal water pressure appreciably equal to atmospheric pressure.

3. The drive method as claimed in claim 2, **characterized in that** the water in said downstream chamber (28) is released via said receiver trap device (14) when said scraper (22) is being driven toward said receiver trap device (14).

4. The drive method as claimed in any one of claims 1 to 3, **characterized in that** the water in said upstream chamber (26) which is at the hydrostatic pressure is released via said launch device (12) when said scraper (22) is being driven in said opposite direction toward said launch device (14).

5. The drive method as claimed in any one of claims 1 to 4, **characterized in that** pressurized water is injected in order to increase the pressure in said downstream chamber (28) to a pressure higher than the hydrostatic pressure.

6. The drive method as claimed in any one of claims 1 to 5, **characterized in that** water is allowed to enter the launch device (12) and the receiver trap device (14) by means of a single controllable mobile system (36).

7. An installation for driving a scraper (22) for a subsea pipe adapted for hydrocarbons transportation, said subsea pipe (10) being designed to be laid on the seabed at a given hydrostatic pressure, said pipe, which has two opposite ends, being equipped at one of its ends (16) with a launch device (12) and at the other end (18) with a receiver trap device, said scraper (22) being designed to slide inside said pipe (10), therein delimiting two watertight chambers, an upstream chamber (26) between said launch device (12) and said scraper (22) and a downstream chamber (28) between said receiver trap device (14) and said scraper (22), said scraper being able to be launched into said pipe (10) from said launch device (12) toward said receiver trap device (14), by initially bringing said pipe to an internal pressure lower than said hydrostatic pressure, said launch device (12) being equipped with an actuatable receiver assembly (30) designed to be actuated in order to allow water from said seabed surrounding said installation at the hydrostatic pressure to enter via said launch device (12) so as to bring said upstream chamber (26) to said hydrostatic pressure in such a way as to drive said scraper (22) toward said receiver trap device (14);
**characterized in** it comprises:
- water circulating means (36) formed by a controllable mobile system (50) and a valve-forming venting device (40) designed to be coupled to said actuatable receiver assembly (30), said receiver trap device (14) and launch device (12) being identical and equipped with an actuatable receiver assembly (30) adapted to operate so as to allow water to enter,
and **in that** said controllable mobile system (50) and said venting device (40) are respectively connected to the actuatable connecting assembly of the launch device (12) and to the actuatable connecting assembly (30) of the receiver assembly (14) in such a way as establish the hydrostatic pressure in said upstream chamber (26), while said controllable mobile system (50) is transferred to said receiver device (14) to be connected thereto and said venting device (40) is connected to the launch device (12) so as to allow water to enter through said receiver device (14) in order to equalize the pressure of the two chambers with respect to the hydrostatic pressure, wherein pressurized water is into said downstream chamber (28) in such a way as to increase the pressure in said downstream chamber (28) to a pressure higher than the hydrostatic pressure and to drive said scraper (22) in an opposite direction, toward said launch device (12), by means of which the respective roles of, said launch device (12) and of said receiver trap device (14) are reversed.

## Patentansprüche

1. Verfahren zum Antrieb eines Schrappers (22) für eine Unterwasserpipeline (10), wobei die Unterwasserpipeline dafür vorgesehen ist, bei einem bestimmten hydrostatischen Druck auf dem Meeresboden (11) installiert zu werden, wobei die Unterwasserpipeline (10), die zwei entgegengesetzte Enden aufweist, an einem ihrer Enden (16) mit einer Wurfvorrichtung (12) und an dem anderen Ende (18) mit einer Aufnahmevorrichtung (14) versehen ist, wobei der Schrapper (22) dafür vorgesehen ist, im Innern der Pipeline (10) zu gleiten, indem er zwei abgedichtete Kammern begrenzt, eine Vorkammer (26) zwischen der Wurfvorrichtung (12) und dem Schrapper (22) und eine Nachkammer (28) zwischen der Aufnahmevorrichtung (14) und dem Schrapper (22), wobei der Schrapper dafür vorgesehen ist, im Innern der Pipeline (10) von der Wurfvorrichtung (12) in Richtung der Aufnahmevorrichtung (14) geworfen zu werden, wobei das Verfahren dergestalt ist, dass die Pipeline (10) zunächst auf einen inneren Druck gebracht wird, der niedriger als der hydrostatische Druck ist, dann der Eintritt des Wassers vom Meeresboden durch die Wurfvorrichtung (12) hindurch ermöglicht wird, um die Vorkammer (26) auf den hydrostatischen Druck zu bringen, derart, dass der Schrapper (22) in Richtung der Aufnahmevorrichtung (14) angetrieben wird; **dadurch gekennzeichnet, dass** es ferner folgende Schritte umfasst:
- es wird der Eintritt des Wassers durch die Aufnahmevorrichtung (14) hindurch ermöglicht, um den Druck der beiden Kammern auf den hydrostatischen Druck anzugleichen, und
- es wird ein Fluid unter Druck durch die Aufnahmevorrichtung (14) hindurch in die Nachkammer (28) eingedrückt, um den Druck in der Nachkammer (28) auf einen Druck zu erhöhen, der höher als der hydrostatische Druck ist, und um den Schrapper (22) in eine entgegengesetzte Richtung in Richtung der Wurfvorrichtung (12) anzutreiben, wodurch die jeweiligen Aufgaben der Wurfvorrichtung (12) und der Aufnahmevorrichtung (14) umgekehrt werden.

2. Antriebsverfahren nach Anspruch 1, **dadurch gekennzeichnet, dass** die Unterwasserpipeline (10) zunächst auf einen inneren Wasserdruck gebracht wird, der im Wesentlichen gleich dem atmosphärischen Druck ist.

3. Antriebsverfahren nach Anspruch 2, **dadurch gekennzeichnet, dass** das Wasser der Nachkammer (28) durch die Aufnahmevorrichtung (14) hindurch freigesetzt wird, wenn der Schrapper (22) in Richtung der Aufnahmevorrichtung (14) angetrieben wird.

4. Antriebsverfahren nach einem der Ansprüche 1 bis 3, **dadurch gekennzeichnet, dass** das Wasser der Vorkammer (26), das sich unter dem hydrostatischen Druck befindet, durch die Wurfvorrichtung (12) hindurch freigesetzt wird, wenn der Schrapper (22) in entgegengesetzter Richtung in Richtung der Wurfvorrichtung (14) angetrieben wird.

5. Antriebsverfahren nach einem der Ansprüche 1 bis 4, **dadurch gekennzeichnet, dass** Wasser unter Druck eingedrückt wird, um den Druck in der Nachkammer (28) auf einen Druck zu erhöhen, der höher als der hydrostatische Druck ist.

6. Antriebsverfahren nach einem der Ansprüche 1 bis 5, **dadurch gekennzeichnet, dass** der Eintritt von Wasser in die Wurfvorrichtung (12) und die Aufnahmevorrichtung (14) mit Hilfe eines einzigen steuerbaren beweglichen Systems (36) ermöglicht wird.

7. Anlage zum Antrieb eines Schrappers (22) für Unterwasserpipeline, die für die Förderung von Kohlenwasserstoffen vorgesehen ist, wobei die Unterwasserpipeline (10) dafür vorgesehen ist, bei einem bestimmten hydrostatischen Druck auf dem Boden installiert zu werden, wobei die Pipeline, die zwei entgegengesetzte Enden aufweist, an einem ihrer Enden (16) mit einer Wurfvorrichtung (12) und an dem anderen Ende (18) mit einer Aufnahmevorrichtung versehen ist, wobei der Schrapper (22) dafür vorgesehen ist, im Innern der Pipeline (10) zu gleiten, indem er zwei abgedichtete Kammern begrenzt, eine Vorkammer (26) zwischen der Wurfvorrichtung (12) und dem Schrapper (22) und eine Nachkammer (28) zwischen der Aufnahmevorrichtung (14) und dem Schrapper (22), wobei der Schrapper dafür vorgesehen ist, im Innern der Pipeline (10) von der Wurfvorrichtung (12) in Richtung der Aufnahmevorrichtung (14) geworfen zu werden, indem die Pipeline zunächst auf einen Innendruck gebracht wird, der niedriger als der hydrostatische Druck ist, wobei die Wurfvorrichtung (12) mit einer betätigbaren Aufnahmeanordnung (30) versehen ist, die dafür vorgesehen ist, betätigt zu werden, um den Eintritt des Wassers des Meeresbodens, das die Anlage mit hydrostatischen Druck umgibt, durch die Wurfvorrichtung (12) hindurch zu ermöglichen, um die Vorkammer (26) auf den hydrostatischen Druck zu bringen, derart, dass der Schrapper (22) in Richtung der Aufnahmevorrichtung (18) angetrieben wird; **dadurch gekennzeichnet, dass** sie aufweist:
- Mittel für die Zirkulation von Wasser (36), die aus einem steuerbaren mobilen System (50) und einer ventilförmigen Auslassvorrichtung (40) bestehen, die dafür vorgesehen sind, an die betätigbare Aufnahmeanordnung (30) angeschlossen zu werden, wobei die Aufnahmevorrichtung (14) und die Wurfvorrichtung (12) identisch sind und jeweils mit einer betätigbaren Aufnahmeanordnung (30) versehen sind, die zur Betätigung vorgesehen sind, um den Durchfluss des Wassers zu ermöglichen;
und dass das betätigbare mobile System (50) und die Auslassvorrichtung (40) jeweils mit der betätigbaren mobilen Anschlussvorrichtung (30) der Wurfvorrichtung (12) und der betätigbaren Anschlussvorrichtung (30) der Aufnahmevorrichtung (14) verbunden sind, um die Vorkammer (26) auf den hydrostatischen Druck zu bringen, während das steuerbare mobile System (50) auf die Aufnahmevorrichtung (14) übertragen wird, um dort angeschlossen zu werden, und die Auslassvorrichtung (40) mit der Wurfvorrichtung (12) verbunden ist, um den Eintritt des Wassers durch die Aufnahmevorrichtung (14) hindurch zu ermöglichen, derart, dass der Druck der beiden Kammern auf den hydrostatischen Druck angeglichen wird, wobei unter Druck stehendes Wasser in die Nachkammer (28) eingedrückt wird, derart, dass der Druck in der Nachkammer (28) auf einen Druck erhöht wird, der höher als der hydrostatische Druck, ist und der Schrapper (22) in einer entgegengesetzten Richtung, in Richtung der Wurfvorrichtung (12), angetrieben wird, wodurch die jeweiligen Aufgaben der Wurfvorrichtung (12) und der Aufnahmevorrichtung (14) vertauscht werden.
